# EUROPEAN PATENT APPLICATION

(11) **EP 3 392 821 A1**
(43) Date of publication of application: **24.10.2018**
(21) Application number: 18168197.4
(22) Date of filing: 19.04.2018
(51) Int. Cl.: G06Q 30/06, G06Q 30/02

(54) **SERVER DEVICE AND SERVICE METHOD**

(30) Priority: 20.04.2017 JP 2017083921
(71) Applicant: Toshiba TEC Kabushiki Kaisha, Tokyo 141-0032 (JP)
(72) Inventor: Suzuki, Shigeaki, Tokyo, 141-8562 (JP)
(74) Representative: Hoffmann Eitle

(57) **Abstract**

Provided are a server device and a service method which are capable of providing a reward to the owner of a reference source commodity even when the same kind of commodity is purchased on-line on the basis of the reference source commodity.

The server device includes a first reception unit configured to receive an individual commodity identifier for identifying a commodity which is a reference source from a user terminal, a providing unit configured to provide information for purchasing the same kind of commodity as the commodity, which has the individual commodity identifier received by the first reception unit, to the user terminal, a specification unit configured to specify an owner identifier associated with the individual commodity identifier received by the first reception unit, from owner management information in which an individual commodity identifier of each commodity and an owner identifier for identifying an owner of the commodity having the individual commodity identifier are associated with each other, in a case where commodities are purchased on the basis of the information provided by the providing unit, and a reward providing unit configured to provide a reward to an owner having the owner identifier specified by the specification unit.

## Description

### CROSS-REFERENCE TO RELATED APPLICATION

This application is based upon and claims the benefit of priority from Japanese Patent Application No. 2017-083921, filed April 20, 2017, the entire contents of which are incorporated herein by reference.

### FIELD

Exemplary embodiments described herein relate to a server device and a service method.

### BACKGROUND

In recent years, stores such as an electronics retail store have adopted a system in which commodities (hereinafter, referred to as reference source commodities) which are owned by the store are displayed and customers view or touch the reference source commodities to determine to purchase the commodities. On the other hand, on-line shopping for purchasing commodities through stores (Web sites) which are opened on-line has also become widespread.

Incidentally, along with the popularization of the above-described on-line shopping, there is a problem in that customers visit stores to view actual commodities (reference source commodities) and purchase the commodities through on-line shopping, that is, the stores become showrooms. In this case, even when the customers purchase commodities of the same kind through Internet shopping on the basis of the reference source commodities displayed in the stores, the purchases are not included in sales of the stores. Thus, there are problems in the prior art related to how commodities are handled.

### SUMMARY OF THE INVENTION

One of the objects of the present invention is to improve prior art techniques and overcome at least some of the prior art problems as for instance above illustrated.

According to a first aspect, it is provided a server device comprising: a first reception unit configured to receive an individual commodity identifier for identifying a commodity which is a reference source from a user terminal; a providing unit configured to provide information for purchasing the same kind of commodity as the commodity, which has the individual commodity identifier received by the first reception unit, to the user terminal; a specification unit configured to specify an owner identifier associated with the individual commodity identifier received by the first reception unit, from owner management information in which an individual commodity identifier of each commodity and an owner identifier for identifying an owner of the commodity having the individual commodity identifier are associated with each other, in a case where commodities are purchased on the basis of the information provided by the providing unit; and a reward providing unit configured to provide a reward to an owner having the owner identifier specified by the specification unit.

Optionally, the services device according to the first aspect further comprises: a second reception unit configured to receive an individual commodity identifier of a commodity to be registered and an owner identifier of an owner of the commodity; and a registration unit configured to register the individual commodity identifier and the owner identifier, which are received by the second reception unit, in the owner management information in association with each other.

Optionally, the device according to the first aspect comprises a third reception unit configured to receive an individual commodity identifier of a commodity which is a target for cancellation of registration; and a registration cancellation unit configured to delete a set of the individual commodity identifier received by the third reception unit and an owner identifier associated with the individual commodity identifier from the owner management information.

Optionally, in the device according to the first aspect, the providing unit provides information on an owner of the commodity, which has the individual commodity identifier received by the first reception unit, to the user terminal.

Optionally, in the device according to the first aspect, the reward providing unit provides a reward to the owner of the owner identifier specified by the specification unit on a condition that a user identifier for identifying a user of the user terminal and the owner identifier are different from each other.

According to a second aspect, it is provided a service method comprising: receiving an individual commodity identifier for identifying a commodity which is a reference source from a user terminal; providing information for purchasing the same kind of commodity as the commodity, which has the received individual commodity identifier, to the user terminal; specifying an owner identifier associated with the received individual commodity identifier, from owner management information in which an individual commodity identifier of each commodity and an owner identifier for identifying an owner of the commodity having the individual commodity identifier are associated with each other, in a case where commodities are purchased on the basis of the provided information; and providing a reward to an owner having the specified owner identifier.

### DESCRIPTION OF THE DRAWINGS

FIG. 1 is a diagram illustrating an example of a system configuration of a sales system according to an embodiment.
FIG. 2 is a block diagram illustrating an example of a hardware configuration of a store terminal according to the embodiment.
FIG. 3 is a diagram illustrating an example of a data configuration of a commodity master table illustrated in FIG. 2.
FIG. 4 is a block diagram illustrating an example of a hardware configuration of a customer terminal according to the embodiment.
FIG. 5 is a block diagram illustrating an example of a hardware configuration of a management server according to the embodiment.
FIG. 6 is a diagram illustrating an example of a data structure of an owner management table illustrated in FIG. 5.
FIG. 7 is a block diagram illustrating an example of functional configurations of the store terminal, the customer terminal, and the management server according to this embodiment.
FIG. 8 is a flow chart illustrating an example of processing performed between the store terminal and the management server according to the embodiment.
FIG. 9 is a flow chart illustrating an example of processing performed between the store terminal and the management server according to the embodiment.
FIG. 10 is a flow chart illustrating an example of processing performed between the customer terminal and the management server according to the embodiment.

### DETAILED DESCRIPTION

An exemplary embodiment provides a server device and a service method which are capable of providing a reward to the owner of a reference source commodity even when the same kind of commodity is purchased on-line on the basis of the reference source commodity.

In general, according to one embodiment, a server device includes a first reception unit configured to receive an individual commodity identifier for identifying a commodity which is a reference source from a user terminal, a providing unit configured to provide information for purchasing the same kind of commodity as the commodity, which has the individual commodity identifier received by the first reception unit, to the user terminal, a specification unit configured to specify an owner identifier associated with the individual commodity identifier received by the first reception unit, from owner management information in which an individual commodity identifier of each commodity and an owner identifier for identifying an owner of the commodity having the individual commodity identifier are associated with each other, in a case where commodities are purchased on the basis of the information provided by the providing unit, and a reward providing unit configured to provide a reward to an owner having the owner identifier specified by the specification unit.

Hereinafter, a server device and a service method according to an embodiment will be described with reference to the accompanying drawings. In the embodiment described below, an example of application to a sales system introduced to a retail store (store) such as an electronics retail store or a clothing retail store will be described, but is not limited to the embodiment.

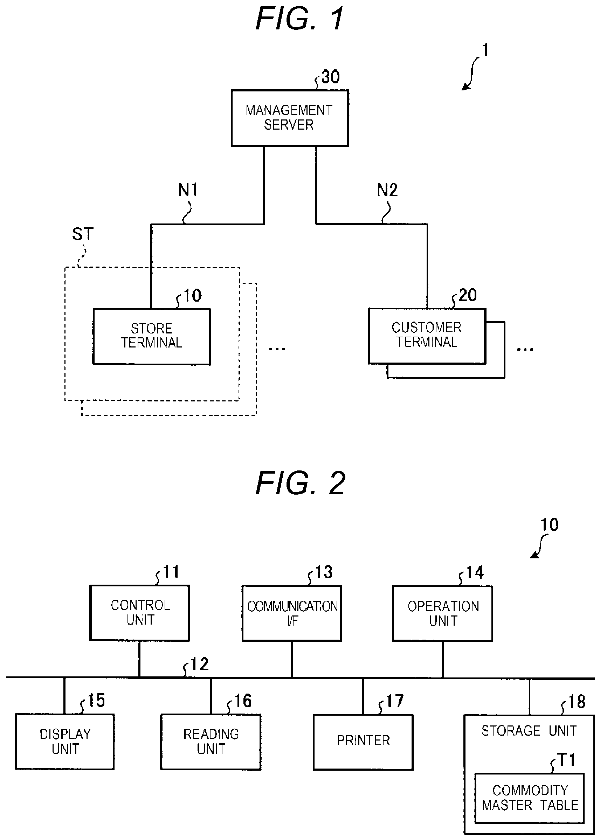

FIG. 1 is a diagram illustrating an example of a system configuration of a sales system 1 according to the embodiment. As illustrated in FIG. 1, the sales system 1 includes a store terminal 10, a customer terminal 20, and a management server 30.

The store terminal 10 and the management server 30 are communicably connected to each other through a network N1 such as the Internet. In addition, the customer terminal 20 and the management server 30 are communicably connected to each other through a network N2 such as a mobile communication network. Meanwhile, the network N1 and the network N2 may be the same network.

The store terminal 10 is an information processing device, such as a Point Of Sales (POS) terminal, which is installed in each store ST. The store terminal 10 executes a settlement process and the like for a commodity purchased by a customer in accordance with an operator's operation. Meanwhile, the number of store terminals 10 (stores ST) connected to the network N1 does not particularly matter.

FIG. 2 is a block diagram illustrating an example of a hardware configuration of the store terminal 10. As illustrated in FIG. 2, the store terminal 10 includes a control unit 11 having a computer configuration constituted by a Central Processing Unit (CPU), a Read Only Memory (ROM), a Random Access Memory (RAM), and the like. A communication I/F 13 is connected to the control unit 11 through a bus 12. The communication I/F 13 is configured to be capable of communicating with the management server 30 connected to the network N1.

In addition, an operation unit 14 and a display unit 15 are connected to the control unit 11 through the bus 12. The operation unit 14 includes a closing key for instructing the termination of a transaction in addition to numerical keys, alphabetic keys, and cursor keys. The display unit 15 includes a display device such as a liquid crystal display, and displays various screens under the control of the control unit 11.

In addition, a reading unit 16 and a printer 17 are connected to the control unit 11 through the bus 12. The reading unit 16 is a reading device for reading attached information attached to a commodity. For example, the reading unit 16 is a reader-writer device capable of reading an IC tag, a code scanner that reads a code symbol such as a two-dimensional code, or the like. The printer 17 is a printer that prints a receipt and the like under the control of the control unit 11.

In addition, a storage unit 18 is connected to the control unit 11 through the bus 12. The storage unit 18 is a storage device such as a Hard Disk Drive (HDD) or a Solid State Drive (SSD). The storage unit 18 stores various programs executed by the control unit 11 (CPU), or setting information. In addition, the storage unit 18 stores a commodity master table T1 storing the price of a commodity, and the like in association with a commodity code for identifying the type of commodity.

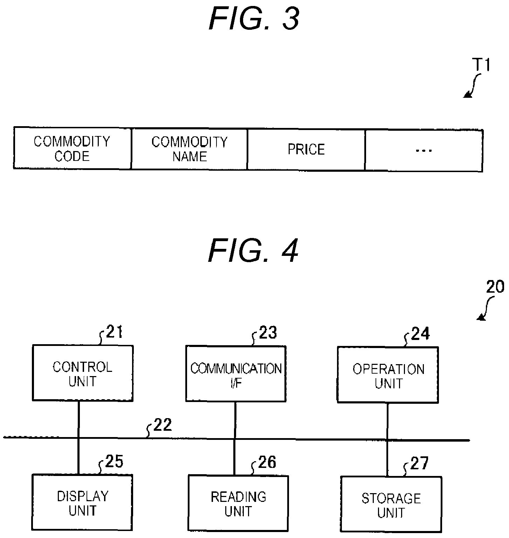

FIG. 3 is a diagram illustrating an example of a data configuration of the commodity master table T1. As illustrated in FIG. 3, the commodity master table T1 stores a commodity name, price, and the like of a commodity sold in the store ST, in association with a commodity code of the commodity. Meanwhile, a data structure of the commodity master table T1 is not limited to the example of FIG. 3.

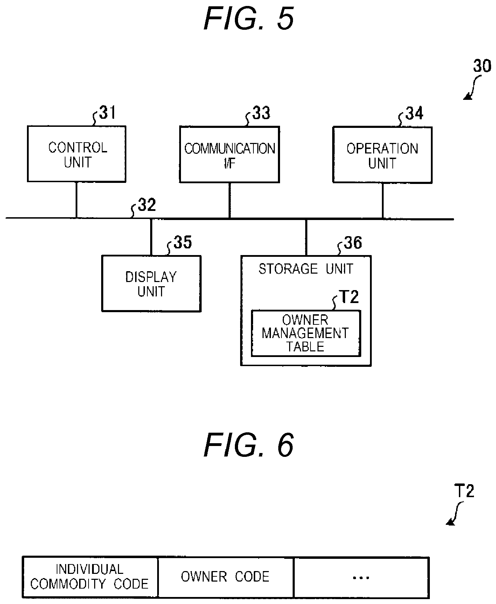

The control unit 11 executes programs stored in the ROM or the storage unit 18 to generally control the operation of the store terminal 10. For example, the control unit 11 executes an owner registration process of registering an individual commodity code of a commodity sold in the store ST and a store code for identifying the store ST in an owner management table T2 (see FIG. 6) to be described later in association with each other.

Here, it is assumed that attached information including a commodity code (for example, a Japan Article Number (JAN) code) for identifying the type of commodity and an individual commodity code for identifying each commodity are attached to a commodity sold in the store ST of the store terminal 10. The attached information is attached to the corresponding commodity, for example, in the form of an IC tag, a two-dimensional code, or the like. Meanwhile, the attached information is not limited to the commodity code and the individual commodity code, and may hold another information. For example, the attached information may hold address information such as a Uniform Resource Identifier (URI) indicating an access destination of the management server 30. In addition, a configuration in which a portion of the individual commodity code includes a commodity code may also be adopted.

Referring back to FIG. 1, the customer terminal 20 is a portable information communication terminal, such as a smart phone or a tablet terminal, which is owned by a customer. Meanwhile, the number of customer terminals 20 connected to the network N2 does not particularly matter.

FIG. 4 is a block diagram illustrating an example of a hardware configuration of the customer terminal 20. As illustrated in FIG. 4, the customer terminal 20 includes a control unit 21 having a computer configuration constituted by a CPU, a ROM, a RAM, and the like. A communication I/F 23 is connected to the control unit 21 through a bus 22. The communication I/F 23 is configured to be capable of communicating with the management server 30 connected to the network N2.

In addition, an operation unit 24 and a display unit 25 are connected to the control unit 21 through the bus 22. The operation unit 24 includes a keyboard and the like. The display unit 25 includes a display device such as a liquid crystal display, and displays various screens under the control of the control unit 21. Meanwhile, the display unit 25 may be configured as a touch panel. In this case, the touch panel functions as the operation unit 24.

In addition, a reading unit 26 is connected to the control unit 21 through the bus 22. The reading unit 26 is a reading device for reading attached information attached to a commodity. For example, the reading unit 26 is a reader-writer device capable of reading an IC tag, a camera capable of reading a code symbol such as a two-dimensional code, or the like.

In addition, a storage unit 27 is connected to the control unit 21 through the bus 22. The storage unit 27 is a storage device such as an HDD or an SSD. The storage unit 27 stores various programs executed by the control unit 21 (CPU), or various pieces of setting information. In addition, the storage unit 27 stores a customer code of a customer owning the customer terminal 20.

Referring back to FIG. 1, the management server 30 is an example of a server device. The management server 30 is installed at, for example, a data center of a company running the store ST, an organization as a third party, or the lie. Meanwhile, in this embodiment, it is assumed that the management server 30 is realized by one server device, but is not limited thereto. The management server may be realized as a cloud server by cooperation of a plurality of server devices.

FIG. 5 is a block diagram illustrating an example of a hardware configuration of the management server 30. As illustrated in FIG. 5, the management server 30 includes a control unit 31 having a computer configuration constituted by a CPU, a ROM, a RAM, and the like. A communication I/F 33 is connected to the control unit 31 through a bus 32. The communication I/F 33 is configured to be capable of communicating with the store terminal 10 connected to the network N1. In addition, the communication I/F 33 is configured to be capable of communicating with the customer terminal 20 connected to the network N2.

In addition, an operation unit 34 and a display unit 35 are connected to the control unit 31 through the bus 32. The operation unit 34 includes a keyboard and the like. The display unit 35 includes a display device such as a liquid crystal display, and displays various screens under the control of the control unit 31.

In addition, a storage unit 36 is connected to the control unit 31 through the bus 32. The storage unit 36 is a storage device such as an HDD or an SSD. The storage unit 36 stores various programs executed by the control unit 31 (CPU), or various pieces of setting information. In addition, the storage unit 36 stores an owner management table T2 in which an individual commodity code of each commodity and an owner code of the owner of the commodity of the individual commodity code are associated with each other.

FIG. 6 is a diagram illustrating an example of a data structure of the owner management table T2. As illustrated in FIG. 6, the owner management table T2 stores an individual commodity code and an owner code associated with each other. Here, the owner code is information for identifying the owner of a commodity corresponding to the individual commodity code. In this embodiment, an example in which a store code of the store ST is used as an owner code will be described. Meanwhile, the data structure of the owner management table T2 is not limited to the example of FIG. 6. For example, the owner management table T2 may store a commodity code and the like of the corresponding commodity in association with the individual commodity code.

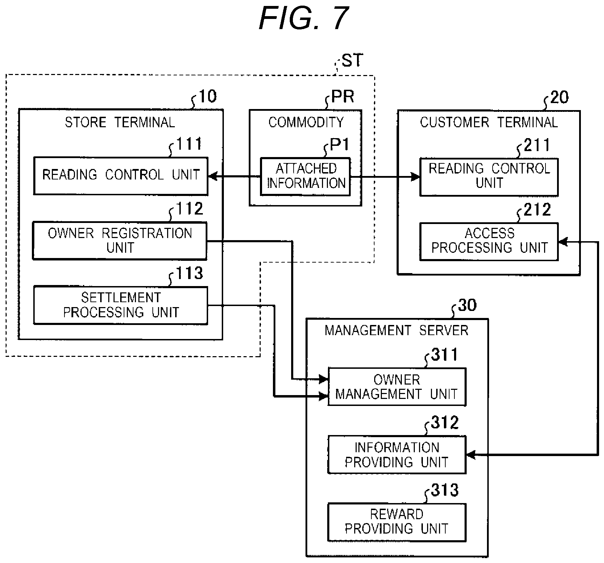

Next, functional configurations of the store terminal 10, the customer terminal 20, and the management server 30 will be described with reference to FIG. 7. FIG. 7 is a diagram illustrating an example of the functional configurations of the store terminal 10, the customer terminal 20, and the management server 30. Here, a commodity PR sold in the store ST is related to functional units of the store terminal 10 and the customer terminal 20, and thus the commodity is not shown in the drawing for convenience of description. Meanwhile, the commodity PR is an example of a reference source commodity displayed within the store ST.

First, the functional configuration of the store terminal 10 will be described. The control unit 11 of the store terminal 10 executes programs stored in the ROM or the storage unit 18 to realize a reading control unit 111, an owner registration unit 112, and a settlement processing unit 113 as functional units as illustrated in FIG. 7.

The reading control unit 111 controls the reading unit 16 to read attached information P1 attached to the commodity PR.

The owner registration unit 112 executes a process (owner registration process) for registering an individual commodity code of the commodity PR sold in the store ST and an owner code of the owner of the commodity PR in the management server 30 in association with each other. Specifically, the owner registration unit 112 extracts the individual commodity code from the attached information P1 which is read from the commodity PR by the reading unit 16 when an instruction for starting the registration of the owner is given through the operation unit 14 or the like. The owner registration unit 112 generates registration information including the extracted individual commodity code and a store code of the store ST, and transmits the generated registration information to the management server 30. Thereby, a set of the individual commodity code and the store code included in the registration information is registered in the owner management table T2 by an owner management unit 311 to be described later. That is, the store code of the store ST selling the commodity PR is registered in the owner management table T2 as an owner code indicating the owner of the commodity PR.

Meanwhile, the owner registration unit 112 may extract the commodity code from the attached information P1 to generate registration information including the commodity code together with the individual commodity code. In addition, the owner registration unit 112 may generate registration information for each individual commodity code. In addition, the owner registration unit 112 may generate registration information including a plurality of individual commodity codes.

The settlement processing unit 113 executes a settlement process related to the settlement of the commodity PR. Specifically, the settlement processing unit 113 specifies the commodity PR corresponding to the commodity code included in the attached information P1 from the commodity master table T1 when the attached information P1 is read from the commodity PR by the reading unit 16. The settlement processing unit 113 reads out the price and the like of the specified commodity PR from the commodity master table T1 and registers the read-out price and the like as sales data. Here, the registration of the sales data means that the information regarding the commodity PR which is read out from the commodity master table T1 is stored in the RAM in association with the number of commodities PR purchased, the individual commodity code, and the like.

In addition, the settlement processing unit 113 executes a settlement process on the basis of sales data registered during a transaction when an instruction for terminating the transaction is given through the operation of the closing key or the like. Specifically, the settlement processing unit 113 multiplies the price of the commodity PR and the number of commodities PR purchased which are included in the sales data to calculate an amount of money related to the settlement of the commodities PR. In addition, the settlement processing unit 113 sums up amounts of money calculated for respective pieces of sales data to calculate the summed amount (hereinafter, referred to as a total commodity amount) of all of the commodities PR registered in one transaction. The settlement processing unit 113 executes a settlement process of performing settlement for the calculated total commodity amount by means of cash or the like.

Meanwhile, in a case where points based on a purchase amount are provided to a customer, the settlement processing unit 113 performs the provision of points by adding the points calculated on the basis of a total commodity amount to a point value (cumulative value) of the corresponding customer. Here, the points are an example of a service provided to the customer from the store ST in order to promote the customer's visit to the store or the customer's purchase. A method of inputting identification information (hereinafter, a customer code) for specifying the customer does not particularly matter, and may be performed through, for example, the reading unit 16, or another input method may be performed.

In addition, the settlement processing unit 113 notifies the management server 30 of the individual commodity code of the commodity PR registered in the transaction when the settlement process is completed, to apply for the cancellation of registration of an owner (owner code). Specifically, the settlement processing unit 113 extracts the individual commodity code from the sales data registered during the transaction when the settlement process is completed. The settlement processing unit 113 generates registration cancellation information including the extracted individual commodity code and transmits the generated registration cancellation information to the management server 30. Thereby, an owner code (store code) registered in association with the individual commodity code included in the registration cancellation information is canceled (deleted) from the owner management table T2 by the owner management unit 311 to be described later.

Meanwhile, the settlement processing unit 113 may transmit the registration cancellation information inclusive of the store code of the store ST. In addition, the settlement processing unit 113 may transmit the registration cancellation information for each individual commodity code, or may transmit the registration cancellation information including individual commodity codes of a plurality of commodities PR at once.

Next, the functional configuration of the customer terminal 20 will be described. The control unit 21 of the customer terminal 20 executes programs stored in the ROM or the storage unit 27 to realize a reading control unit 211 and an access processing unit 212 as functional units as illustrated in FIG. 7.

The reading control unit 211 controls the reading unit 26 to read the attached information P1 attached to the commodity PR.

The access processing unit 212 accesses the management server 30 on a condition that the attached information P1 is read from the commodity PR. Specifically, the access processing unit 212 extracts the individual commodity code from the attached information P1 when the attached information P1 attached to the commodity PR is read by the reading unit 26. The access processing unit 212 generates access information including the extracted individual commodity code and transmits the generated access information to the management server 30.

Meanwhile, the access processing unit 212 may extract the commodity code from the attached information P1 to transmit access information including the extracted commodity code together with the individual commodity code. In addition, it is assumed that a timing when the access processing unit 212 transmits the access information to the management server 30 does not particularly matter. For example, the access processing unit 212 may transmit the access information based on the attached information P1 to the management server 30 during the reading of the attached information P1. In addition, for example, the access processing unit 212 may transmit the access information based on the attached information P1 to the management server 30 in accordance with an instruction from an operator (customer) of the customer terminal 20 after reading the attached information P1. In the latter case, the access processing unit 212 may hold one piece or a plurality of pieces of attached information P1 that are read from the commodity PR in the RAM or the like, and may transmit the access information based on any one piece of attached information P1 to the management server 30 at a timing when the attached information P1 is selected.

In addition, the access processing unit 212 has a function such as a Web client and displays a screen, which is based on information provided from the management server 30 as a response to the access information, on the display unit 25. For example, the management server 30 provides a purchase screen for purchasing the same kind of commodity PR' as the commodity PR to the customer terminal 20 as described later. The access processing unit 212 displays the purchase screen provided from the management server 30 on the display unit 25, and cooperates with the management server 30 when receiving an operation of instructing the purchase of the commodity PR' to execute processing (purchase processing) related to the purchase of the commodity PR'.

Next, the functional configuration of the management server 30 will be described. The control unit 31 of the management server 30 executes programs stored in the device to realize the owner management unit 311, an information providing unit 312, and a reward providing unit 313 as functional units as illustrated in FIG. 7.

The owner management unit 311 is an example of a second reception unit, a registration unit, a third reception unit, and a cancellation of registration unit. The owner management unit 311 is a functional unit that manages the owner management table T2, and executes the registration and cancellation of an individual commodity code and an owner code on the owner management table T2. Specifically, the owner management unit 311 registers an individual commodity code and an owner code (store code), which are included in registration information, in the owner management table T2 in association with each other when receiving the registration information from the store terminal 10. In addition, the owner management unit 311 deletes a data entry related to the individual commodity code included in registration cancellation information from the owner management table T2 when receiving the registration cancellation information from the store terminal 10.

Meanwhile, the owner management unit 311 may be configured to delete only an owner code related to the individual commodity code included in the registration cancellation information from the owner management table T2. In addition, for example, the owner management table T2 may store an individual commodity code of each commodity PR in advance. In this case, the owner management unit 311 retrieves the individual commodity code included in the registration information from the owner management table T2, and registers an owner code (store code) included in the registration information in association with the corresponding individual commodity code.

The information providing unit 312 is an example of a first reception unit and a providing unit. The information providing unit 312 is a functional unit that provides information to the customer terminal 20 that transmits the access information. Specifically, the information providing unit 312 has a function such as a Web server, specifies the commodity PR' corresponding to the commodity PR of the individual commodity code included in the access information, and provides a purchase screen for purchasing the commodity PR' to the customer terminal 20 which is an access source. Here, the commodity PR' means the same kind of commodity as the commodity PR specified by the individual commodity code, that is, a commodity having the same commodity code as that of the commodity PR.

Meanwhile, it is assumed that a method of specifying the commodity PR' (commodity code) from the individual commodity code does not particularly matter. For example, in a case where the commodity code is transmitted from the customer terminal 20 as access information together with the individual commodity code, the commodity PR' may be specified using the commodity code. In addition, in a case where the individual commodity code and the commodity code are registered in the owner management table T2 in association with each other, the commodity PR' may be specified using the commodity code associated with the individual commodity code. In addition, the commodity PR' may be specified from a code string (for example, a commodity code) included in the individual commodity code.

The purchase screen includes, for example, commodity information (commodity name, price, commodity description, and the like) regarding the commodity PR', an operator for instructing the purchase of the commodity PR', and the like. The purchase screen may be prepared for each commodity PR', or may be dynamically generated by the information providing unit 312 on the basis of content data in which commodity information of each commodity PR' is stored. In addition, the information providing unit 312 may cooperate with an external on-line shop (Web site) selling the corresponding commodity PR' to provide the purchase screen for the commodity PR' to the customer terminal 20.

The information providing unit 312 cooperates with the customer terminal 20 when receiving an operation of instructing the purchase of the commodity PR' on the basis of the provided purchase screen, to thereby execute purchase processing related to the purchase of the commodity PR'. Meanwhile, the procedure and contents of the purchase processing do not particularly matter, and a known technique related to on-line shopping and the like can be used.

Meanwhile, in a case where points based on a purchase amount are provided to the corresponding customer during the purchase processing, the information providing unit 312 provides the points by adding points calculated on the basis of a total commodity amount to a point value (cumulative value) of the corresponding customer, similar to the settlement processing unit 113. Meanwhile, it is assumed that a method of inputting a customer code for specifying the customer does not particularly matter. For example, the customer terminal 20 may transmit access information including a customer code of a customer owning the customer terminal 20. In addition, the information providing unit 312 may provide a login screen for inputting the customer code and a password of a customer to the customer terminal 20 prior to the purchase screen, to thereby acquire the customer code through the login screen.

In addition, the information providing unit 312 may provide information regarding the store ST of the owner code (store code) associated with the individual commodity code included in the access information to the customer terminal 20 which is an access source, together with the purchase screen. The information regarding the store ST does not particularly matter, and may be, for example, an advertisement of the store ST, or the like. Meanwhile, the information regarding the store ST may be provided in a state of being included in the purchase screen.

The reward providing unit 313 is an example of a specification unit and a reward providing unit. The reward providing unit 313 provides a reward based on an actual purchase record of the commodity PR' to the owner of the commodity PR which is a reference source. Specifically, when processing related to the purchase of the commodity PR' is completed between the information providing unit 312 and the customer terminal 20, the reward providing unit 313 determines that the same kind of commodity PR' as the commodity PR is purchased, on the basis of the commodity PR having the individual commodity code included in the access information. Subsequently, the reward providing unit 313 specifies an owner code registered in association with the individual commodity code from the owner management table T2 on the basis of the individual commodity code of the access information. The reward providing unit 313 provides the reward based on the actual purchase record of the commodity PR' to the owner (store ST) of the specified owner code.

Here, the type of reward does not particularly matter, and various configurations can be adopted. For example, the reward providing unit 313 may include an amount of money such as 10% of the price of the commodity PR' in an amount of money of sales of the owner of the commodity PR as a reward. In addition, the reward providing unit 313 may provide points calculated in accordance with the price of the commodity PR' to the owner of the commodity PR as a reward.

Further, a method of providing a reward does not particularly matter, and various configurations can be adopted. For example, the reward providing unit 313 may provide a reward by transferring an amount of money calculated as a reward to a bank account or the like of an owner to whom the reward is to be provided. In addition, the reward providing unit 313 may provide a reward by recording an amount of money or points calculated as the reward in association with an owner code of an owner to whom the reward is to be provided.

Hereinafter, the operations of the store terminal 10, the customer terminal 20, and the management server 30 will be described.

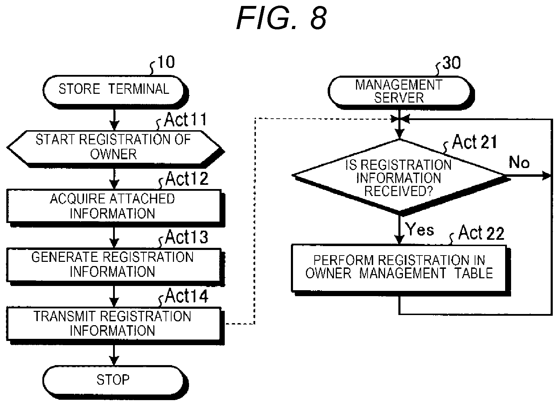

First, processing, related to the registration of an owner code, which is performed between the store terminal 10 and the management server 30 will be described with reference to FIG. 8. FIG. 8 is a flow chart illustrating an example of processing performed between the store terminal 10 and the management server 30. Such processing is performed, for example, when the commodity PR is carried into the store ST or is displayed.

When an instruction for starting the registration of an owner is given through the operation unit 14 or the like (Act 11), the owner registration unit 112 of the store terminal 10 operates the reading unit 16 to acquire the attached information P1 from the commodity PR to be displayed (Act 12).

Subsequently, the owner registration unit 112 generates registration information including the individual commodity code included in the attached information P1 acquired in Act 12 and the store code of the store ST (Act 13). The owner registration unit 112 transmits the registration information generated in Act 13 to the management server 30 (Act 14), and terminates the processing. Meanwhile, in a case where there are two or more commodities PR to be registered, the owner registration unit 112 repeatedly executes the processes of Acts 12 to 14 for each commodity PR.

On the other hand, the owner management unit 311 of the management server 30 stands by until the registration information is transmitted from the store terminal 10 (Act 21; No). When the registration information is received (Act 21; Yes), the owner management unit 311 registers an individual commodity code and a store code which are included in the registration information in the owner management table T2 in association with each other (Act 22), and returns to Act 21.

By the above-described processing, the individual commodity code of the commodity PR sold in the store ST is registered in the owner management table T2 of the management server 30 in association with the owner code (store code of the store ST) of the owner of the commodity PR.

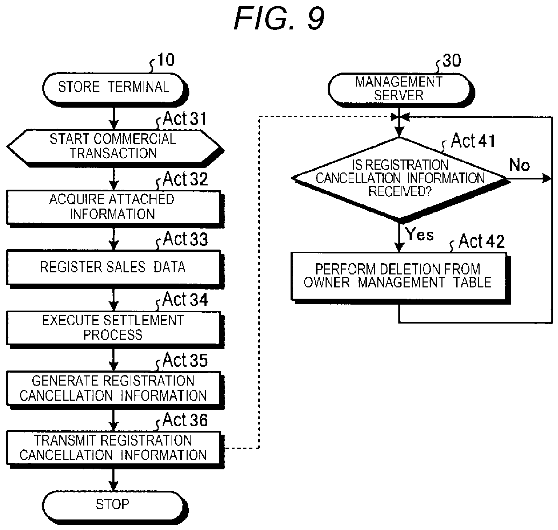

Next, processing, related to the cancellation of registration of an owner code, which is performed between the store terminal 10 and the management server 30 will be described with reference to FIG. 9. FIG. 9 is a flow chart illustrating an example of processing performed between the store terminal 10 and the management server 30. Such processing is performed, for example, during the settlement of the commodity PR in the store ST.

When an instruction for starting a commercial transaction is given through the operation unit 14 or the like (Act 31), the settlement processing unit 113 of the store terminal 10 operates the reading unit 16 to acquire the attached information P1 from the commodity PR purchased by a customer (Act 32).

Subsequently, the settlement processing unit 113 specifies a commodity PR corresponding to a commodity code included in the attached information P1 from the commodity master table T1, and registers sales data of the commodity PR in the RAM (Act 33). Meanwhile, the settlement processing unit 113 repeatedly executes the processes of Act 32 and Act 33 until an instruction for terminating the transaction is given.

Subsequently, when an instruction for terminating the transaction is given through the operation of the closing key, or the like, the settlement processing unit 113 executes a settlement process on the basis of the registered sales data (Act 34). When the settlement process is completed, the settlement processing unit 113 extracts an individual commodity code from each sales data registered, and generates registration cancellation information including the individual commodity code (Act 35). The settlement processing unit 113 transmits the generated registration cancellation information to the management server 30 (Act 36), and terminates the processing.

On the other hand, the owner management unit 311 of the management server 30 stands by until the registration cancellation information is transmitted from the store terminal 10 (Act 41; No). When the registration cancellation information is received (Act 41; Yes), the owner management unit 311 deletes a data entry of the individual commodity code included in the registration cancellation information, that is, a set of the individual commodity code and the store code from the owner management table T2 (Act 42), and returns to Act 41.

By the above-described processing, an owner code of a commodity PR purchased by a customer in the store ST is deleted from the owner management table T2 of the management server 30. That is, this means that a right to the commodity PR disappears from the store ST by the customer's purchase of the commodity PR.

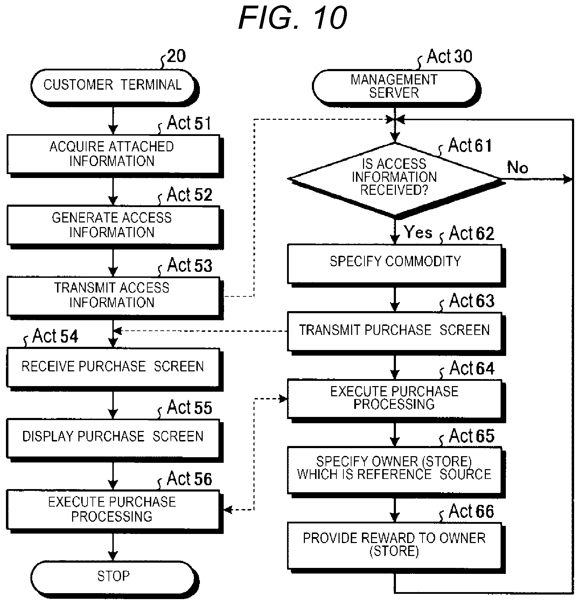

Next, processing, related to the purchase of the commodity PR' , which is performed between the customer terminal 20 and the management server 30 will be described with reference to FIG. 10. FIG. 10 is a flow chart illustrating an example of processing performed between the customer terminal 20 and the management server 30.

A customer carrying the customer terminal 20 causes the customer terminal 20 to read the attached information P1 attached to any commodity PR in the store ST. The reading control unit 211 of the customer terminal 20 operates the reading unit 26 to acquire the attached information P1 attached to the commodity PR through the reading unit 26 (Act 51).

Subsequently, the access processing unit 212 of the customer terminal 20 generates access information including an individual commodity code, included in the attached information P1 read in Act 51, on the basis of the individual commodity code (Act 52). Subsequently, the access processing unit 212 transmits the generated access information to the management server 30 to perform access to the management server 30 (Act 53).

On the other hand, the information providing unit 312 of the management server 30 stands by until access information is transmitted from the customer terminal 20 (Act 61; No). When the access information is received (Act 61; Yes), the information providing unit 312 specifies the type (commodity code) of commodity PR which is a reference source on the basis of an individual commodity code included in the access information (Act 62). Subsequently, the information providing unit 312 provides (transmits) a purchase screen for a commodity PR' having the commodity code specified in Act 62 to the customer terminal 20 which is an access source (Act 63) .

When the access processing unit 212 of the customer terminal 20 receives the purchase screen provided from the management server 30 (Act 54), the access processing unit displays the purchase screen on the display unit 25 (Act 55) . Here, when a customer gives an instruction for purchasing the commodity PR' on the basis of the purchase screen displayed on the display unit 25, the access processing unit 212 of the customer terminal 20 cooperates with the information providing unit 312 of the management server 30 to execute purchase processing for the commodity PR' (Act 56, Act 64).

Subsequently, when the purchase processing in Act 64 is completed, the information providing unit 312 of the management server 30 specifies an owner code of the owner of the commodity PR which is a reference source from the owner management table T2 (Act 65). The information providing unit 312 provides a reward based on the actual purchase record of the commodity PR' to the owner of the owner code which is specified in Act 65 (Act 66), and returns to Act 61.

As described above, the management server 30 specifies a commodity PR referred to by a customer owning the customer terminal 20 on the basis of the individual commodity code included in the access information, and provides a purchase screen for promoting the purchase of the same kind of commodity PR' to the customer terminal 20. When the customer of the customer terminal 20 purchases the commodity PR', the management server 30 provides a reward based on the actual purchase record of the commodity PR' to the store ST which is the owner of the commodity PR being a reference source.

Thereby, in the sales system 1, even when a customer visiting the store ST refers to a commodity PR displayed within the store ST and purchases the same kind of commodity PR' on-line, it is possible to provide a reward based on the actual purchase record to the store ST. Therefore, it is possible to improve a motivation to sales promotion of the owner (store ST) of the commodity PR.

Meanwhile, in the above-described embodiment, as described in the processing in FIG. 9, a configuration is adopted in which an owner code (store code) is deleted from the owner management table T2 when the commodity PR is purchased in the store ST, but is not limited thereto. For example, a configuration may be adopted in which a customer code of a customer who is a new owner is registered again in the owner management table T2 as an owner code in a case where the commodity PR is purchased in the store ST.

In this case, for example, the settlement processing unit 113 of the store terminal 10 acquires a customer code of a customer purchasing the commodity PR from a storage medium (customer terminal 20 or the like) which is owned by the customer through the reading unit 16 or the like. The settlement processing unit 113 generates owner update information including an individual commodity code of the commodity PR purchased by the customer and a customer code of the customer in Act 35 of FIG. 9, and transmits the owner update information to the management server 30 in Act 36.

On the other hand, the owner management unit 311 of the management server 30 receives the owner update information in Act 41 of FIG. 9. In Act 42, the owner management unit 311 retrieves a data entry, which is related to the individual commodity code included in the owner update information, from the owner management table T2, and overwrites the owner code with the customer code included in the owner update information. Thereby, it is possible to switch the owner of the commodity PR from the store ST to the customer by the customer's purchase of the commodity PR in the store ST.

Meanwhile, a configuration may be adopted in which a reward is provided to the owner of a commodity PR which is a reference source even when a certain user refers to a commodity PR owned by another customer (user) and purchases the same type of commodity PR' through the management server 30. Thereby, a motivation of the user owning the commodity PR to sales promotion can be improved, and thus it is possible to promote the user's sales promotion activity by word of mouth or the like.

In addition, the commodity PR' sold through the management server 30 may be registered in the owner management table T2 in association with a customer code of a customer purchasing the commodity PR'. In this case, the owner management unit 311 registers an individual commodity code of the commodity PR' in the owner management table T2 as an individual commodity code of a new commodity PR in association with the customer code of the customer purchasing the commodity PR'. Meanwhile, a method of inputting an owner code does not particularly matter, and various methods can be adopted. For example, a configuration may be adopted in which a customer code of a customer, who owns the customer terminal 20, which is included in access information transmitted by the customer terminal 20 is input. In addition, the information providing unit 312 may provide a login screen for inputting a customer code or a password of a customer to the customer terminal 20 prior to the purchase screen to acquire the customer code through the login screen.

Further, the owner management unit 311 of the management server 30 may register an individual commodity code to be registered in the owner management table T2 in a mode in which a relationship between a commodity PR which is a reference source and a commodity PR' which is a reference destination and purchased through the management server 30 on the basis of the commodity PR can be traced.

Specifically, the owner management unit 311 of the management server 30 sets the individual commodity code included in the access information to be an individual commodity code of the commodity PR which is a reference source, and registers an individual commodity code of the commodity PR', which is purchased on the basis of the commodity PR in association with the individual commodity code, as an individual commodity code of the commodity PR' which is a reference destination. In addition, when a new commodity which is the same kind of commodity as the commodity PR' registered in the owner management table T2 is purchased, the owner management unit 311 sets the commodity PR' to be a commodity PR which is a new reference source and registers the set commodity in association with the individual commodity code of the commodity PR' which is a reference destination. Thereby, a relationship between commodities PR' based on one commodity PR is recorded over a plurality of generations.

Meanwhile, it is assumed that the reward providing unit 313 provides a reward based on the actual purchase record of the commodity PR' to the owner of a commodity PR right above the commodity PR', but a configuration may be adopted in which a reward is also provided to the owner of a commodity PR at a higher level. For example, a configuration may be adopted in which the reward providing unit 313 provides a reward to owners of all or some commodities PR among commodities PR at a higher level which are associated with the commodity PR'. Meanwhile, the reward providing unit 313 may change contents of a reward to be provided in accordance with a distance between the commodity PR and the commodity PR' purchased, that is, the number of generations and, for example, may increase a reward to be provided as a distance to the commodity PR' decreases.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

For example, in the above-described embodiment, a configuration is adopted in which the management server 30 provides a reward to the owner of a commodity PR which is a reference source when the purchase of a commodity PR' is performed on the basis of a purchase screen, but a configuration may be adopted in which a reward is provided in a case where a predetermined condition is satisfied. For example, a configuration may be adopted in which the reward providing unit 313 provides a reward on a condition that a customer owning the customer terminal 20 transmitting access information and the owner of the commodity PR which is a reference source are differentfrom each other. Specifically, the reward providing unit 313 compares a customer code of the customer owning the customer terminal 20 and an owner code of the commodity PR which is a reference source with each other, and provides a reward to the owner having the owner code on a condition that both the codes are different from each other. Thereby, it is possible to prevent a reward from being provided in a case where the owner of the commodity PR and a purchaser of a commodity PR' based on the commodity PR are the same as each other. Meanwhile, a method of inputting a customer code for specifying a customer does not particularly matter, and the above-described method may be adopted.

In addition, in the above-described embodiment, a configuration in which the store terminal 10 holds the commodity master table T1 is adopted, but is not limited thereto. For example, a configuration may be adopted in which an external device (store server or the like) which is accessible by the store terminal 10 holds the commodity master table T1.

In addition, in the above-described embodiment, a configuration in which the management server 30 holds the owner management table T2 is adopted, but is not limited thereto. For example, a configuration may be adopted in which an external device accessible by the management server 30 holds the owner management table T2.

In addition, the program executed by each device of the above-described embodiment is preinstalled in a recording medium (ROM or a memory device) included in the device and provided, but is not limited thereto. For example, the program in an installable format file or an executable format file may be recorded on a computer readable recording medium such as a CD-ROM, a flexible disk (FD), a CD-R, and a Digital Versatile Disk (DVD) and provided. Further, a recording medium is not limited to a medium independent of a computer or an embedded system, and also includes a recording medium which records or temporarily records a program transmitted via a LAN or the Internet and downloaded.

In addition, the program executed by each device of the embodiment is stored in a computer connected to a network such as the Internet, and may be provided by being downloaded via the network, and may be provided or distributed via the network such as the Internet.

## Claims

1. A server device comprising:
a first reception unit configured to receive an individual commodity identifier for identifying a commodity which is a reference source from a user terminal;
a providing unit configured to provide information for purchasing the same kind of commodity as the commodity, which has the individual commodity identifier received by the first reception unit, to the user terminal;
a specification unit configured to specify an owner identifier associated with the individual commodity identifier received by the first reception unit, from owner management information in which an individual commodity identifier of each commodity and an owner identifier for identifying an owner of the commodity having the individual commodity identifier are associated with each other, in a case where commodities are purchased on the basis of the information provided by the providing unit; and
a reward providing unit configured to provide a reward to an owner having the owner identifier specified by the specification unit.

2. The device according to claim 1, further comprising:
a second reception unit configured to receive an individual commodity identifier of a commodity to be registered and an owner identifier of an owner of the commodity; and
a registration unit configured to register the individual commodity identifier and the owner identifier, which are received by the second reception unit, in the owner management information in association with each other.

3. The device according to claim 1 or 2, further comprising:
a third reception unit configured to receive an individual commodity identifier of a commodity which is a target for cancellation of registration; and
a registration cancellation unit configured to delete a set of the individual commodity identifier received by the third reception unit and an owner identifier associated with the individual commodity identifier from the owner management information.

4. The device according to any of claims 1 to 3, wherein the providing unit provides information on an owner of the commodity, which has the individual commodity identifier received by the first reception unit, to the user terminal.

5. The device according to any of claims 1 to 4, wherein the reward providing unit provides a reward to the owner of the owner identifier specified by the specification unit on a condition that a user identifier for identifying a user of the user terminal and the owner identifier are different from each other.

6. A service method comprising:
receiving an individual commodity identifier for identifying a commodity which is a reference source from a user terminal;
providing information for purchasing the same kind of commodity as the commodity, which has the received individual commodity identifier, to the user terminal;
specifying an owner identifier associated with the received individual commodity identifier, from owner management information in which an individual commodity identifier of each commodity and an owner identifier for identifying an owner of the commodity having the individual commodity identifier are associated with each other, in a case where commodities are purchased on the basis of the provided information; and
providing a reward to an owner having the specified owner identifier.
